(19) Europäisches Patentamt
European Patent Office
Office européen des brevets

(11) EP 0 430 134 B1

(12) **EUROPEAN PATENT SPECIFICATION**

(45) Date of publication and mention of the grant of the patent:
**31.07.1996 Bulletin 1996/31**

(51) Int Cl.[6]: **C08F 265/04**, C08F 285/00, C08F 283/12, C08L 57/00

(21) Application number: **90122542.5**

(22) Date of filing: **26.11.1990**

(54) **High impact graft copolymers and resin compositions**

Hochschlagfeste Pfropfkopolymere und Harzzusammensetzungen

Copolymères greffés à haute résistance au choc et compositions de résines

(84) Designated Contracting States:
**BE DE FR GB IT NL**

(30) Priority: **27.11.1989 JP 307263/89**

(43) Date of publication of application:
**05.06.1991 Bulletin 1991/23**

(73) Proprietor: **MITSUBISHI RAYON CO., LTD.**
**Tokyo 104 (JP)**

(72) Inventors:
- **Yamamoto, Naoki, c/o Central Research Lab.**
  **Otake-shi, Hiroshima 739-06 (JP)**
- **Yanagase, Akira, c/o Central Research Lab.**
  **Otake-shi, Hiroshima 739-06 (JP)**
- **Itoh, Masakazu, c/o Central Research Lab.**
  **Otake-shi, Hiroshima 739-06 (JP)**

(74) Representative:
**TER MEER - MÜLLER - STEINMEISTER & PARTNER**
**Mauerkircherstrasse 45**
**81679 München (DE)**

(56) References cited:

| | |
|---|---|
| **EP-A- 0 246 537** | **EP-A- 0 249 964** |
| **EP-A- 0 307 963** | **EP-A- 0 308 871** |
| **EP-A- 0 326 038** | **EP-A- 0 326 041** |
| **EP-A- 0 327 806** | **EP-A- 0 332 188** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

BACKGROUND OF THE INVENTION

Field of the Invention

The present invention relates to a high impact resin composition giving molded products excellent in impact resistance, surface hardness and surface appearance.

More particularly, the present invention relates to a high impact resin composition comprising a polyorganosiloxane graft copolymer giving molded products excellent in surface hardness and surface appearance, the graft copolymer being obtained by graft-polymerizing a vinyl monomer to a composite rubber comprising a polyorganosiloxane rubber component and a polyalkyl (meth)acrylate rubber component.

Description of the Prior Art

Generally, high impact resins are composed of a rubber and a matrix. and it is said that to use a resin having as low a glass transition temperature as possible for formation of the rubber layer is advantageous in absorbing impact energy (hereinafter said glass transition temperature is abbreviated as $T_g$). This is also clear from the fact that resins containing a polybutadiene resin rubber having a $T_g$ of -80°C, e.g. ABS resins are superior in impact resistance per same rubber content to high impact resins using a polybutyl acrylate resin rubber having a $T_g$ of -55°C. From this, it is thought of that resins superior in impact resistance to ABS resins can be produced if polydimethylsiloxane having a $T_g$ of -123°C can be utilized as a rubber source for high impact resins. Generally, however, polyorganosiloxanes are difficult to form chemical bonds because they are poor in reactivity to vinyl monomers. Hitherto, there have been disclosed many methods about the formation of chemical bonds between these both components, but they are not satisfactory.

For example, U.S. Patent No. 3,898,300 discloses that a graft copolymer improved in impact strength is formed by polymerizing a vinyl monomer in an emulsion of polydimethylsiloxane containing vinylsiloxane or allylsiloxane.

Also, U.S. Patent No. 4,071,577 discloses a method for obtaining further improved impact strength by using a vinyl group-containing siloxane. For example, this patent specification discloses that the presence of a graft copolymer having an intermediary mercapto group such as a polydimethylsiloxane-mercaptopropylsiloxane copolymer improves the impact characteristics.

Further, Japanese Patent Application Kokai No. 60-252613 discloses that a methacryloyloxy group-containing polyorganosiloxane copolymer has improved impact resistance.

Formerly, in view of the situation as described above, the present inventors made an extensive study on the composition of constituent resins of the graft copolymer in which a polyorganosiloxane rubber was used for improving impact resistance, surface appearance, etc. As a result, the present inventors found that by combining a composite rubber graft copolymer obtained by graft-polymerizing a vinyl monomer in high efficiency to a composite rubber comprising a polyorganosiloxane component and a polyalkyl (meth)acrylate rubber component with various thermoplastic resins, there can be obtained a resin composition in which the combined graft copolymer and thermoplastic resin are in a good compatibility, and which is superior in moldability and flowability and can give molded products having remarkably improved impact resistance, weather resistance and surface appearance. Thus, the present inventors made inventions disclosed in Japanese Patent Application Kokai Nos. 1-79257, 1-79255 and 1-190746. These methods, however, have a problem that insufficient surface hardness and poor appearance of the molded products are brought about because of a necessity to use a large amount of the polyorganosiloxane rubber.

For this reason, the present inventors have extensively studied to obtain a composite rubber developing impact resistance with a decreased amount of the polyorganosiloxane rubber. As a result, surprisingly, the present inventors have found that by properly

EP-A-0 326 041 discloses a vinyl chloride resin composition comprising a vinyl chloride resin and a compound rubber type graft copolymer. The compound rubber type graft copolymer comprises a compound rubber having an average particle diameter of 0.08 to 0.6 µm and having such a structure that 1 to 99 wt.-% of a polyorganosiloxane rubber component and 1 to 99 wt.% of a polyalkyl(meth)acrylate rubber component are entangled in an inseparable fashion.

EP-A-0 332 188 discloses a thermoplastic resin composition comprising a thermoplastic polymer selected from homopolymers and copolymers of ethylenic unsaturated monomers or from polymers of bifunctionally reactive compounds, and 5-95 % by weight of a compound-rubber-based graft copolymer which is produced by the graft polymerization of one or more vinyl monomers onto compound rubber particles having an average diameter of 0.08-0.6 µm and a structure in which 10-90 % by weight of a polyorganosiloxane rubber component and 90-10 % by weight of a polyalkyl(meth)acrylate rubber component are tangled together so as not to be separable from each other.

EP-A-0 249 964 discloses a polycarbonate resin composition comprising either a polycarbonate resin (A) or a mixture (A') of the polycarbonate resin and a saturated polyester and/or a polyester elastomer and either a siloxane-based graft copolymer (B) obtained by graft polymerization of 95-10 % by weight of at least one vinyl monomer onto 5- 90 % by weight of a polyorganosiloxane rubber which exhibits a degree of swelling of 3 to 30 as measured in toluene.

controlling the swelling degree of th composite rubber, there can be obtained a polyorganosiloxane graft copolymer which develops impact resistance even if the polyorganosiloxane rubber content is less than 10 wt.% based on the composite rubber, and gives molded products having a high surface hardness and an improved appearance. The present inventors thus attained to the present invention.

SUMMARY OF THE INVENTION

The present invention relates to a high impact resin composition comprising 5 wt.% or more of a polyorganosiloxane graft copolymer in which one or more vinyl monomers have been graft-polymerized onto a composite rubber, wherein the weight ratio of composite rubber to vinyl monomer being 30-95:5-70, the composite rubber having such a structure that 1 to 10 wt.% of a polyorganosiloxane rubber component and 99 to 90 wt.% of a polyalkyl (meth)acrylate rubber component are tangled with each other so as not to separate, as well as having a gel content of 85% or more and a swelling degree of 3 to 15, both measured with a toluene solvent, and an average particle size of 0.08 to 0.6 µm, said composite rubber being obtainable by first preparing a latex of the polyorganosiloxane rubber, then impregnating the particles of the polyorganosiloxane rubber with an alkyl (meth)acrylate, a crosslinking agent for polyalkyl (meth)acrylate rubbers and a graft-linking agent for polyalkyl (meth)acrylate rubbers and then carrying out a polymerization, and at least one member selected from the group consisting of a polycarbonate resin, a polyester resin, and a homopolymer and copolymer obtained by polymerizing 70 to 100 wt.% of at least one vinyl monomer selected from the group consisting of aromatic alkenyl compounds, vinyl cyanide compounds and (meth)acrylates with 0 to 30 wt.% of other vinyl monomer copolymerizable with those vinyl monomers.

DESCRIPTION OF PREFERRED EMBODIMENTS

The characteristics of the resin compositions of the present invention are not obtained by merely using as a rubber source either one of the polyorganosiloxane rubber component or polyalkyl (meth)acrylate rubber component, or a simple mixture of these components in place of the above composite rubber. Molded products having excellent impact resistance, surface hardness and surface appearance are not obtained until the polyorganosiloxane rubber component and the polyalkyl (meth)acrylate rubber component are tangled with each other so as not to separate.

When the amount of the polyorganosiloxane rubber component constituting the composite rubber exceeds 10 wt.%, molded products obtained from the resulting graft copolymer or resin composition become poor in surface appearance. On the other hand, when the amount of the polyalkyl (meth)acrylate rubber component exceeds 99 wt.%, the impact resistance of the resulting graft copolymer or resin composition becomes poor.

The swelling degree is a parameter related to the modulus of elasticity of rubbers. In order to effectively develop impact resistance, rubbers need to have a low modulus of elasticity and a sufficient toughness. This property required for rubbers used in high impact resins is indicated by the solvent-absorbing ability, i.e. swelling degree of rubbers.

This swelling degree is also an important factor in the composite rubber comprising a polyorganosiloxane and a polyalkyl (meth)acrylate. A low swelling degree increases the modulus of elasticity of the composite rubber to worsen the impact resistance. On the other hand, a high swelling degree lowers the modulus of elasticity of the composite rubber to enhance the impact resistance, but it lowers the toughness of the composite rubber, so that the hardness of the resin surface lowers and the appearance of the molded product becomes poor. The present inventors made a detailed study about the swelling degree of the composite rubber, and as a result have found that when the composite rubber comprising a polyorganosiloxane and a polyalkyl (meth)acrylate comprises 90 wt.% or more of the polyalkyl meth(acrylate), it gives a resin well-balanced between the impact resistance and surface hardness if its swelling degree is limited to a range of 3 to 15.

Consequently, in order that the graft copolymer and the resin composition of the present invention may develop proper impact resistance, the composite rubber used in the present invention must have a swelling degree of 3 to 15, in other words, it must absorb 3 to 15 g of toluene when immersed in a 23°C toluene for 24 hours. Besides, the gel content of the composite rubber must be 85 wt.% or more.

More preferably, the swelling degree is in a range of 4 to 14, and the gel content is 90 wt.% or more.

When the swelling degree of the composite rubber is less than 3, the impact resistance lowers. When it exceeds 15, the surface hardness lowers. A lowering in surface hardness is also observed when the gel content of the composite rubber is less than 85 wt.%, and at that time, the impact resistance also somewhat lowers at the same time.

Also, the average particle size of the composite rubber needs to be in a range of 0.08 to 0.6 µm. When the average particle size is less than 0.08 µm, the impact resistance of the resulting molded product becomes poor, and when it

exceeds 0.6 μm, the impact resistance of the resulting molded product becomes poor, and at the same time, the surface appearance thereof also becomes poor.

For producing the composite rubber having such an average particle size, the emulsion polymerization method is most suitable. That is, the polyorganosiloxane rubber can be prepared by emulsion polymerization with an organosiloxane and a crosslinking agent for silicone rubbers (hereinafter referred to as crosslinking agent (I)), both of which are described below. In this case, a graft-linking agent for silicone rubbers (hereinafter referred to as graft-linking agent (I)) may be used together.

Organosiloxane includes various three or more-membered cyclic compounds, among which three to six-membered cyclic compounds are preferably used. For example, there are mentioned hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, etc. These cyclic compounds are used alone or in mixture of two or more of them.

The amount of these cyclic compounds used is 50 wt.% or more, preferably 70 wt.% or more of the polyorganosiloxane rubber component.

The crosslinking agent (I) includes silane compounds having three or four alkoxy groups such as triethoxyphenylsilane, tetramethoxysilane, tetra-n-propoxysilane, tetraethoxysilane, tetra-n-propoxysilane, tetrabutoxysilane, etc. Particularly, silane compounds having four alkoxy groups are preferred, and among these, tetraethoxysilane is particularly preferred.

The amount of the crosslinking agent (I) used is 1 to 30 wt.% based on the polyorganosiloxane rubber component.

The graft-linking agent (I) includes compounds capable of forming a unit represented by the following formula:

$$CH_2{=}CR^2{-}COO{-}(CH_2)_p{-}SiR^1_nO_{(3-n)/2} \qquad (I\text{-}1)$$

$$CH_2{=}CH\text{-}SiR^1_nO_{(3-n)/2} \qquad (I\text{-}2)$$

or

$$HS{-}(CH_2)_p{-}SiR^1_nO_{(3-n)/2} \qquad (I\text{-}3)$$

wherein $R^1$ represents methyl, ethyl, propyl or phenyl, $R^2$ represents hydrogen or methyl, n represents an integer of 0, 1 or 2, and p represents an integer of 1 to 6. For example, (meth)acryloyloxysiloxanes capable of forming a unit represented by the formula (I-1), because of its high graft efficiency, can form effective graft chains, so that it is advantageous in terms of development of impact resistance. Particularly, methacryloyloxysiloxanes are preferred. Specific examples of methacryloyloxysiloxanes include β-methacryloyloxyethyldimethoxymethylsilane, γ-methacryloyloxypropylmethoxydimethylsilane, γ-methacryloyloxypropyldimethoxymethylsilane, γ-methacryloyloxypropyltrimethoxysilane, γ-methacryloyloxypropylethoxydiethylsilane, γ-methacryloyloxypropyldiethoxymethylsilane, δ-methacryloyloxybutyldiethoxymethylsilane, etc.

The amount of the graft-linking agent (I) used is 0 to 10 wt.% based on the polyorganosiloxane rubber component.

For producing the polyorganosiloxane rubber, methods described, for example, in U.S. Patent No. 2,891,920 and No. 3,294,725 can be used.

In practicing the present invention, for example, it is preferred to produce the polyorganosiloxane rubber by a method of shear-mixing a mixed solution comprising the organosiloxane, the crosslinking agent (I) and if necessary the graft-linking agent (I) with water, for example, using a homogenizer in the presence of a sulfonic acid type emulsifier such as an alkylbenzenesulfonic acid, etc.

The alkylbenzenesulfonic acid is suitable because it acts as both an emulsifier for organosiloxanes and a polymerization initiator. In this case, it is desirable to use a metal alkylbenzenesulfonate together because the alkylbenzenesulfonate is effective to keep the polymer stably in carrying out the graft polymerization.

After carrying out the polymerization, the polymerization is stopped by neutralizing the reaction solution with an aqueous solution of an alkali (e.g. sodium hydroxide, potassium hydroxide, sodium carbonate).

Next, the polyalkyl (meth)acrylate rubber component, the other constituent of the composite rubber, can be formed by the use of an alkyl (meth)acrylate, a crosslinking agent for polyalkyl (meth)acrylate rubbers (hereinafter referred to as crosslinking agent (II)) and a graft-linking agent for polyalkyl (meth)acrylate rubbers (hereinafter referred to as graft-linking agent (II)), all of which are described below.

The alkyl (meth)acrylate includes alkyl acrylates such as methyl acrylate, ethyl acrylate, n-propyl acrylate, n-butyl acrylate, 2-ethylhexyl acrylate, etc. and alkyl methacrylates such as hexyl methacrylate, 2-ethylhexyl methacrylate, n-lauryl methacrylate, etc. Among these, n-butyl acrylate is particularly preferred.

The crosslinking agent (II) includes ethylene glycol dimethacrylate, propylene glycol dimethacrylate, 1,3-butylene

glycol dimethacrylate, 1,4-butylene glycol dimethacrylate, etc. These compounds are used alone or in a mixture of two or more of them.

The graft-linking agent (II) includes allyl methacrylate, triallyl cyanurate, triallyl isocyanurate, etc. Allyl methacrylate can also be used as the crosslinking agent (II). These compounds are used alone or in mixture of two or more of them.

The total amount of these crosslinking agent (II) and graft-linking agent (II) is 0.1 to 10 wt.% based on the polyalkyl (meth)acrylate rubber component with the proviso that when allyl methacrylate is used both as crosslinking agent (II) and as graft-linking agent (II), its amount is 0.2 to 20 wt.%.

For forming the polyalkyl (meth)acrylate rubber component, it is preferred to first prepare the latex of the polyorganosiloxane rubber, then impregnate the particles of the polyorganosiloxane rubber with monomers to be used for the forming of the polyalkyl (meth)acrylate rubber component and thereafter polymerize the monomer. In other words, by adding the foregoing alkyl (meth)acrylate; crosslinking agent (II) and graft-linking agent (II) to the latex of the polyorganosiloxane rubber and then carrying out polymerization, the polyorganosiloxane component and the polyalkyl (meth)acrylate component form a complicated structure to give a composite rubber latex which is substantially unseparable into these components.

When the monomers to be used for the forming of the polyalkyl (meth)acrylate rubber component, with which the particles of the polyorganosiloxane rubber are impregnated, are subjected to radical polymerization, the resulting polyalkyl (meth)acrylate rubber component and the polyorganosiloxane rubber component are tangled with each other and crosslinked respectively with oneself so that they cannot be separated from each other. Thus, the composite rubber in this invention is obtained. In addition, when the graft-linking agent (I) is used in the production of the polyorganosiloxane rubber component, linkages are further formed between the polyorganosiloxane rubber component and the polyalkyl (meth)acrylate rubber component. The above radical polymerization is carried out as usual, that is, by a method using a peroxide, azo initiator or redox initiator prepared by combining an oxidizing agent and a reducing agent. Among these methods, a method using a redox initiator is preferred. Particularly, a sulfoxylate initiator prepared by combining ferrous sulfate, disodium ethylenediaminetetraacetate, Rongalit and hydroperoxide is preferred.

The composite rubber preferably used in the present invention is such that its polyorganosiloxane rubber component has a main skeleton comprising a repeating unit of dimethylsiloxane and its polyalkyl (meth)acrylate rubber component has a main skeleton comprising a repeating unit of n-butyl acrylate.

To the composite rubber thus prepared by emulsion polymerization, a vinyl monomer can be graft-polymerized.

The polyorganosiloxane graft copolymer (A) used in the present invention is obtained by graft-polymerizing a vinyl monomer to the above composite rubber.

The vinyl monomer includes aromatic alkenyl compounds such as styrene, α-methylstyrene, vinyltoluenes; methacrylates such as methyl methacrylate, 2-ethylhexyl methacrylate; acrylates such as methyl acrylate, ethyl acrylate, butyl acrylate; organic acids such as acrylic acid, methacrylic acid; vinyl cyanide compounds such as acrylonitrile, methacrylonitrile. These vinyl monomers are used alone or in mixture of two or more of them.

The composite rubber to vinyl monomer weight ratio of the polyorganosiloxane graft copolymer (A) is as follows based on the weight of the graft copolymer (A): 30 to 95 wt.%, preferably 40 to 90 wt.% for the composite rubber and 5 to 70 wt.%, preferably 10 to 60 wt.% for the vinyl monomer. When the vinyl monomer content is less than 5 wt.%, the resulting graft copolymer, when blended with other resins, is not sufficiently dispersed in the resins. When the content exceeds 70 wt.%, development of impact strength undesirably lowers. In this graft polymerization, the vinyl monomer may be added to the composite rubber in one stage or multi-stage.

The polyorganosiloxane graft copolymer thus obtained as a latex is added to a hot water containing a dissolved metal salt (e.g. calcium chloride, magnesium sulfate) to carry out salting-out and coagulation of the graft copolymer. Thus, the graft copolymer alone can be separated and recovered.

The polyorganosiloxane graft copolymer according to the present invention is a high impact resin by itself, but may be used in mixture with various thermoplastic resins.

As the thermoplastic resin which can be mixed with the above graft copolymer, there are mentioned a polycarbonate resin, a polyester resin and a homopolymer and copolymer obtained by polymerizing 70 to 100 wt.% of at least one vinyl monomer selected from the group consisting of aromatic alkenyl compounds, vinyl cyanide compounds and (meth) acrylates with 0 to 30 wt.% of other vinyl monomer copolymerizable with the above vinyl monomer.

The polycarbonate resin used in the present invention is one obtained from dihydroxydiarylalkane and may have an optionally branched structure. This polycarbonate resin is produced by the known methods. Generally, however, it is produced by reacting a dihydroxy compound and/or polyhydroxy compound with phosgene or a diester of carbonic acid. A suitable dihydroxydiarylalkane includes also those having an alkyl, chlorine or bromine at an ortho position with respect to the hydroxy group. Preferred specific examples of the dihydroxydiarylalkane are 4,4'-dihydroxy-2,2-diphenylpropane (bisphenol A), tetramethylbisphenol A, bis(4-hydroxyphenyl)-p-diisopropylbenzene, etc. The branched polycarbonate resin is produced, for example, by replacing a part, for example, 0.2 to 2 mole% of the dihydroxy compound by a polyhydroxy compound. Specific examples of the polyhydroxy compound include, phloroglucinol, 4,6-dimethyl-2,4,6-tri-(4-hydroxyphenyl)heptene-2,1,3-dimethyl-2,4,6-tri-(4-hydroxyphenyl)benzene, 1,1,1-tri-(4-hydroxyphenyl)ethane, 2,2-bis[4-(3,4-dihydroxyphenyl)cyclohexyl]propane, etc.

The polyester resin used in the present invention comprises as a main constituent either one of the following polymers:

(a) An aromatic polyester obtained from an aromatic dicarboxylic acid and a dihydric phenol, lower aliphatic diol or alicyclic diol.
(b) An aromatic polyester obtained from an aromatic hydroxycarboxylic acid.
(c) A copolymer of (a) and (b).

The aromatic dicarboxylic acid is represented by the formula,

$$HO - CO - R_4 - CO - OH$$

wherein $R_4$ represents a substituted or unsubstituted phenylene group, a group represented by the formula,

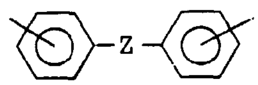

(in which Z represents a direct bond, $-CH_2-$ or -CO-) or a naphthylene group. The substituent of the phenylene group includes chlorine, bromine, methyl, etc. The substituted phenylene group may have 1 to 4 substituents. Examples of the aromatic dicarboxylic acid are terephthalic acid, isophthalic acid, diphenyl-m,m'-dicarboxylic acid, diphenyl-p,p'-dicarboxylic acid, diphenylmethane-m,m'-dicarboxylic acid, diphenylmethane-p,p'-dicarboxylic acid, benzophenone-4,4'-dicarboxylic acid, naphthalenedicarboxylic acid, etc. These compounds can be used alone or in mixture of two or more of them. Further, a small amount of an aliphatic dicarboxylic acid (e.g. adipic acid, sebacic acid) may also be used together. The dihydric phenol includes hydroquinone, resorcinol, dihydroxynaphthalene, biphenyl diol, 1,8-dihydroxyanthraquinone and dihydric phenols represented by the formula,

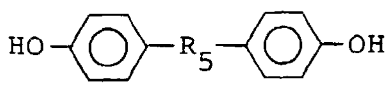

wherein $R_5$ represents oxygen, sulfur, -CO-, $-SO_2-$ or a $C_1$-$C_5$ alkylene which may be substituted with a halogen. Such the dihydric phenols include 2,2-bis(4-hydroxyphenyl)propane (bisphenol A), 4,4'-dihydroxydiphenyl sulfone, 4,4'-dihydroxydiphenyl ether, 4,4'-dihydroxydiphenyl sulfide, 4,4'-dihydroxydiphenyl ketone, 4,4'-dihydroxydiphenylmethane, 1,1-bis(4-hydroxyphenyl)ehtane, 1,1-bis(4-hydroxyphenyl)butane, 1,1-bis(4-hydroxyphenyl)-2,2,2-trichloroethane, etc. These compounds may be used alone or in mixture of two or more of them. The lower aliphatic diol is a $C_2$-$C_6$ alkylenediol which includes ethylene glycol, propylene glycol, 1,4-butanediol, 1,5-pentanediol, 1,6-hexanediol, etc. These compounds may be used alone or in mixture of two or more of them. The alicyclic diol includes cyclohexanediol, cyclohexanedimethanol, etc. These compounds may be used alone or in mixture of two or more of them. The aromatic hydroxycarboxylic acid is represented by the formula,

$$HO - R_6 - CO - OH$$

wherein $R_6$ represents phenylene, a group represented by the formula,

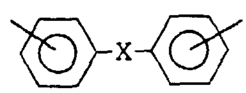

(in which X represents a direct bond or a $C_1$-$C_5$ alkylene) or naphthylene. Such the aromatic hydroxycarboxylic acid includes m-hydroxybenzoic acid, p-hydroxybenzoic acid, 2-hydroxy-6-naphthoic acid, 2-(4'-hydroxyphenyl)-2-(4-carboxyphenyl)propane, 4-hydroxyphenyl-4-carboxyphenyl ether, etc. These compounds may be used alone or in mixture of two or more of them.

Among these polyester resins, particularly polyethylene terephthalate, polybutylene terephthalate and poly(1,4-cyclohexylene dimethylene) terephthalate preferably exhibit the effect of the present invention.

Specific examples of the vinyl monomer used in the present invention which is selected from the group consisting of aromatic alkenyl compounds, vinyl cyanide compounds and (meth)acrylates are mentioned below for each compound of the group. Specific examples of the aromatic alkenyl compound are styrene, α-methylstyrene, vinyltoluenes, etc. Those of the vinyl cyanide compound are acrylonitrile, methacrylonitrile, etc. Those of the acrylate are methyl acrylate, ethyl acrylate, butyl acrylate, etc., and those of the methacrylate are methyl methacrylate, 2-ethylhexyl methacrylate, etc. These compounds are used alone or in mixture of two or more of them. The other vinyl monomer copolymerizable with the above vinyl monomer is used as need arises, and its amount used is up to 30 wt.% based on the whole vinyl polymer. Specific examples of the other vinyl monomer copolymerizable are ethylene, vinyl acetate, etc.

In the present invention, the resin composition comprising a mixture of the polyorganosiloxane graft copolymer and the thermoplastic resin must contain the former graft copolymer in an amount of 5 wt.% or more. When the polyorganosiloxane graft copolymer is less than 5 wt.%, the impact resistance-improving effect is a little.

The resin composition of the present invention is prepared by mechanically mixing the above components (A) and (B), or (A) and (C) using the known apparatus such as Banbury mixer, roll mills, etc. and then shaping the resulting mixture into pellets using the known apparatus such as a twin-screw extruder, etc.

Articles can be molded at a wide temperature range using thus extruded and shaped pellets, and for molding of the articles from the pellets, common injection molding machines are used.

If necessary, the polyorganosiloxane graft copolymer and the resin composition of the present invention can be blended with fibrous reinforcing agents, fillers, plasticizers, flame retardants, lubricants, pigments, etc.

The present invention will be illustrated with reference to the following examples. "Part" and "%" in the examples mean "part by weight" and "wt.%" unless otherwise stated. Measurements of Izod impact strength were carried out according to the method of ASTM D 258. In measuring the surface hardness of the resin, Rockwell hardness was measured according to the method of ASTM D 785.

Example 1

Production of a graft copolymer (S-1)

Two parts of tetraethoxysilane, 0.5 part of γ-methacryloyloxypropyldimethoxymethylsilane and 97.5 parts of octamethylcyclotetrasiloxane were mixed to obtain 100 parts of a siloxane mixture. 100 Parts of this mixed siloxane was added to 200 parts of distilled water in which 1 part of sodium dodecylbenzenesulfonate and 1 part of dodecylbenzenesulfonic acid had been dissolved. The resulting mixed solution was preliminarily stirred at 10,000 rpm with a homomixer, and then emulsified under a pressure of 19.6 MPa (200 kg/cm$^2$) with a homogenizer to obtain an organosiloxane latex. This latex was transferred to a separable flask equipped with a condenser and a stirring blade, heated at 80°C for 5 hours while mixing with stirring and allowed to stand at 20°C. After 48 hours, this latex was neutralized to a pH of 7.5 with an aqueous sodium hydroxide solution to terminate polymerization. Thus, a polyorganosiloxane rubber latex-1 was obtained. The conversion of the organosiloxanes was 88.5%, and the average particle size of the polyorganosiloxane rubber was 0.24 μm.

17 Parts of the above polyorganosiloxane rubber latex-1 was sampled and put in a separable flask equipped with a stirrer. After adding 200 parts of distilled water thereto, the atmosphere in the flask was replaced by a nitrogen gas. Thereafter, the contents of the flask was heated to 50°C, and thereto, a mixed solution of 93.1 parts of n-butyl acrylate, 1.9 parts of allyl methacrylate and 0.23 part of tert-butyl hydroperoxide was added. Stirring was then continued for 30 minutes to allow this mixed solution to permeate into the polyorganosiloxane rubber particles. Thereafter, a mixed solution of 0.002 part of ferrous sulfate, 0.006 part of disodium ethylenediaminetetraacetate and 0.26 part of Rongalit in 5 parts of distilled water was added to start radical polymerization. The inner temperature was then kept at 70°C for 2 hours to complete the polymerization. Thus, a composite rubber latex was obtained. This composite rubber consists of 5 wt.% of the polyorganosiloxane rubber component and 95 wt.% of polybutylacrylate rubber component. A part of this latex was sampled, and the average particle size of the composite rubber was measured to find that it was 0.26 μm. This latex was dried to obtain a solid matter of the composite rubber. This solid matter was subjected to extraction with toluene at 90°C for 12 hours, and a gel content was measured to find that it was 92.8 wt.%. The swelling degree in toluene of the composite rubber was measured by immersing the composite rubber in toluene at room temperature for 24 hours. As a result, the swelling degree in toluene was 10.3.

A mixed solution of 0.48 part of cumene hydroperoxide, 1 part of n-octylmercaptan and 199 parts of methyl methacrylate was added dropwise to this composite rubber latex at 70°C over 90 minutes. Thereafter, the latex was kept at 70°C for 2 hours to complete graft polymerization of methyl methacrylate onto the composite rubber. The conversion of methyl methacrylate was 99.8%.

The resulting graft copolymer latex was added dropwise to 600 parts of hot water containing 1.5 wt.% of calcium chloride to coagulate the graft copolymer. The graft copolymer was then separated, washed and dried at 75°C for 16 hours to obtain 295 parts of the dry powder of a composite rubber type graft copolymer (hereinafter referred to as S-1).

The S-1 powder thus obtained was shaped into pellets at 240°C with a uniaxial extruder. The pellets were dried, supplied to an injection molding machine (Promat 165/75 type; produced by Sumitomo Heavy Industries, Ltd.) and injection-molded at a cylinder temperature of 240°C and a mold temperature of 60°C to obtain various test pieces. Using this test piece, 0.635 cm (1/4") Izod impact strength (23°C) was measured to find that it was 92.12 J/cm (9.4 kg·cm/cm). Rockwell hardness was 105 by the R scale.

Examples 2 to 4 and Comparative Examples 1 and 2

In producing the graft copolymer S-1, a relationship between the swelling degree and impact resistance of the composite rubber was examined by changing the weight of allyl methacrylate used to produce the composite rubber.

Using the polyorganosiloxane rubber latex-1, polymerization was carried out under the same conditions as in the production of the graft copolymer S-1 except that n-butyl acrylate and allyl methacrylate were used in amounts shown in Table 1. As a result, the swelling degree of the composite rubbers obtained is as shown in Table 1. Further, the Izod impact strength and Rockwell hardness of the high impact methyl methacrylate resins produced in respective examples also are shown in Table 1. From these results, it can be seen that the impact resistance and Rockwell hardness are high only when the swelling degree of the composite rubber is in a range of 3 to 15.

Table 1

| | Feed ratio for composite rubber | | Physical properties of composite rubber | | Physical properties of polymer | |
|---|---|---|---|---|---|---|
| | Butyl acrylate (part) | Allyl methacrylate (part) | Swelling degree | Gel content (%) | Izod impact strength with 0.635 cm (1/4") notch (23°C)[(kg·cm/cm)] (J/cm) | Rockwell hardness (R scale) |
| Example 2 | 94.52 | 0.48 | 13.4 | 91.2 | (9.8) 96.04 | 102 |
| Example 3 | 94.05 | 0.95 | 8.2 | 92.2 | (7.6) 74.48 | 108 |
| Example 4 | 92.62 | 2.38 | 4.1 | 93.4 | (7.2) 70.56 | 110 |
| Comparative Example 1 | 94.81 | 0.19 | 19.8 | 91.1 | (8.4) 82.32 | 81 |
| Comparative Example 2 | 91.2 | 3.8 | 2.1 | 94.0 | (2.6) 25.48 | 110 |

Examples 5 and 6 and Comparative Examples 3 and 4

Using the above polyorganosiloxane latex-1, the effect of polyorganosiloxane content of the composite rubber comprising polyorganosiloxane, butyl acrylate and allyl methacrylate was examined.

Polyorganosiloxane, butyl acrylate and allyl methacrylate were fed in proportions shown in Table 2, and polymerization was carried out in the same manner as in Example 1.

The swelling degree and gel content of the composite rubbers obtained are shown in Table 2. Further, the Izod impact strength and Rockwell hardness of the high impact methacrylate resins produced in respective examples are also shown in Table 2. From these results, it can be seen that the impact resistance and Rockwell hardness are high only when the polyorganosiloxane content is 1 to 10 wt.% of the composite rubber.

Table 2

| | Feed ratio for composite rubber | | | Physical properties of composite rubber | | Physical properties of polymer | |
|---|---|---|---|---|---|---|---|
| | Polyorganosiloxane latex-1 [Polyorganosiloxane rubber contained therein] (part) | Butyl acrylate (part) | Allyl methacrylate (part) | Swelling degree | Gel content (%) | Izod impact strength with 0.635 cm (1/4") notch (23°C) [(kg·cm/cm)] (J/cm) | Rockwell hardness (R scale) |
| Example 5 | 6.9 [2.0] | 96.04 | 1.96 | 9.4 | 91.1 | (7.4) 72.52 | 112 |
| Example 6 | 27.6 [8.0] | 90.16 | 1.84 | 8.9 | 92.4 | (9.5) 93.1 | 104 |
| Comparative Example 3 | 51.7 [15.0] | 83.3 | 1.7 | 7.9 | 92.2 | (8.2) 80.36 | 81 |
| Comparative Example 4 | 0 | 98.5 | 1.5 | 8.5 | 91.6 | (2.1) 20.58 | 95 |

Examples 7 to 9

A mixed solution of 30 parts of styrene, 10 parts of acrylonitrile and 0.1 part of cumene hydroperoxide was added dropwise at 70°C over 1 hour to 312 parts of the composite rubber latex produced in the production of the graft copolymer S-1. Thereafter, the resulting mixture was kept at 70°C for 2 hours to complete graft polymerization onto the composite rubber.

The resulting graft copolymer latex was added dropwise to 600 parts of hot water containing 1.5 wt.% of calcium chloride to coagulate the graft copolymer. The graft copolymer was then separated, washed and dried to obtain a graft copolymer S-2.

This graft copolymer S-2 was mixed with an acrylonitrile-styrene copolymer [acrylonitrile content, 27 wt.%; reduced viscosity (ηsp/C) at 25°C in chloroform, 0.59 dl/gr] in proportions shown in Table 3. The mixture was extruded and injection-molded in the same manner as in Example 1 to obtain various test pieces. Physical properties were evaluated with these test pieces to obtain results shown in Table 3.

Table 3

| | Composition | | Physical properties of resin composition | |
|---|---|---|---|---|
| | S-2 (wt.%) | Acrylonitrilestyrene copolymer (wt.%) | Izod impact strength with 0.635 cm (1/4") notch (23°C) [(kg·cm/cm)] (J/cm) | Rockwell hardness (R scale) |
| Example 7 | 10 | 90 | (10.2) 99.96 | 116 |
| Example 8 | 20 | 80 | (16.4) 160.72 | 113 |
| Example 9 | 40 | 60 | (20.9) 204.82 | 110 |

Examples 10 to 14 and Comparative Examples 5 to 8

A composite rubber was produced under the same conditions as in Example 1 except that the afore-mentioned polyorganosiloxane latex-1, n-butyl acrylate and allyl methacrylate were fed in amounts shown in Table 4. The physical properties of the composite rubbers obtained are shown in Table 4.

A mixed solution of 18 parts of styrene, 7 parts of acrylonitrile and 0.1 part of cumene hydroperoxide was added dropwise to 25 parts of this composite rubber at 65°C over 30 minutes. The reaction temperature was then kept at 70°C for 1 hour to complete first-stage graft polymerization onto the composite rubber. Thereafter, a mixed solution of 36 parts of styrene, 14 parts of acrylonitrile, 0.5 part of tert-dodecylmercaptan and 0.3 part of cumene hydroperoxide was added dropwise at 70°C over 60 minutes. The reaction temperature was then kept at 70°C for 2 hours to complete second-stage graft polymerization onto the composite rubber.

The resulting polyorganosiloxane graft copolymer latex was coagulated and dried in the same manner as in Example 1. The polymer obtained was extruded, pelletized and injection-molded to obtain various test pieces. Physical properties were evaluated with these test pieces to obtain results shown in Table 4.

Table 4

| | Feed ratio for composite rubber | | | Physical properties of composite rubber | | Physical properties of polymer | |
|---|---|---|---|---|---|---|---|
| | Polyorganosiloxane latex-1 [Polyorganosiloxane rubber contained therein] (part) | Butyl acrylate (part) | Allyl meth-acrylate (part) | Swelling degree | Gel content (%) | Izod impact strength with 0.635 cm (1/4") notch [(kg·cm/cm)] (J/cm) | Rockwell hardness (R scale) |
| Example 10 | 5.2 [1.5] | 23.0 | 0.5 | 10.5 | 91.0 | (26.8) 262.64 | 98 |
| Example 11 | 6.9 [2.0] | 22.5 | 0.5 | 10.1 | 91.8 | (28.9) 283.22 | 96 |
| Example 12 | 6.9 [2.0] | 22.0 | 1.0 | 6.9 | 93.2 | (21.5) 210.7 | 100 |
| Example 13 | 6.9 [2.0] | 21.5 | 1.5 | 4.5 | 93.8 | (16.6) 162.68 | 101 |
| Example 14 | 6.9 [2.0] | 22.8 | 0.2 | 14.2 | 88.3 | (25.6) 250.38 | 91 |

- to be cont'd -

- cont'd -

| | | | | | | | |
|---|---|---|---|---|---|---|---|
| Comparative Example 5 | 0 | 24.5 | 0.5 | 9.6 | 90.2 | (3.6) 35.28 | 101 |
| Comparative Example 6 | 10.3 [3.0] | 21.6 | 0.4 | 13.3 | 89.5 | (20.4) 199.92 | 82 |
| Comparative Example 7 | 6.9 [2.0] | 20.0 | 3.0 | 2.5 | 93.7 | (9.3) 91.14 | 101 |
| Comparative Example 8 | 6.9 [2.0] | 22.9 | 0.1 | 19.6 | 81.8 | (18.6) 182.28 | 79 |

From these results, the following are seen: When the polyorganosiloxane latex is not used, the impact resistance

is poor. When the polyorganosiloxane content exceeds 10 wt.% of the composite rubber, the surface hardness of the molded product undesirably lowers.

The swelling degree of the composite rubber can be changed by the amount of allyl methacrylate used. When the swelling degree exceeds 15, however, the surface hardness of the molded product lowers, and when it is less than 3, the impact resistance becomes poor.

Examples 15 to 17 and Comparative Examples 9 and 10

The graft copolymer S-2 obtained in Examples 7 to 9 was mixed with a polycarbonate resin (7022 PJ; produced by Mitsubishi Kasei Corp.) in proportions shown in Table 5. The mixture was extruded and pelletized at 260°C and injection-molded to obtain test pieces. Evaluation was carried out with these test pieces. From the results obtained, it can be seen that an improvement in impact resistance at low temperatures is observed as compared with use of the polycarbonate resin alone.

Tavle 5

| | Composition (wt.%) | | Physical properties of resin composition | |
|---|---|---|---|---|
| | S-2 | Polycarbonate | Izod impact strength with 0.635 cm (1/4") notch (J/cm) [(kg·cm/cm)] | |
| | | | 23°C | -30°C |
| Example 15 | 8 | 92 | 676.2 (69) | 352.8 (36) |
| Example 16 | 20 | 80 | 666.4 (68) | 470.4 (48) |
| Example 17 | 40 | 60 | 617.4 (63) | 509.6 (52) |
| Comparative Example 9 | 0 | 100 | 646.8 (66) | 49 (5) |
| Comparative Example 10 | 3 | 97 | 627.2 (64) | 68.6 (7) |

Examples 18 to 21 and Comparative Examples 11 to 13

Using the aforementioned polyorganosiloxane latex-1, the graft copolymer was produced in the same manner as in Examples 5 and 6 and Comparative Examples 3 and 4 except that a mixed solution of 0.2 part of cumene hydroperoxide and 50 parts of methyl methacrylate was used as the mixed solution containing monomers to be graft-polymerized onto the composite rubber.

The swelling degree and gel content of the resulting composite rubbers are as shown in Table 6. Tee graft copolymers obtained were each mixed with a PBT resin (Tufpet N-1000; produced by Mitsubishi Rayon Co., Ltd.) in proportions shown in Table 6. Izod impact strength was measured, and the results are shown in Table 6.

From these results, it can be seen that the impact resistance and Rockwell hardness are high only when the polyorganosiloxane content is 1 to 10 wt.% of the composite rubber.

Table 6

| | Resin composition | | | | | | |
|---|---|---|---|---|---|---|---|
| | Graft copolymer | | | | | | PBT resin |
| | Feed ratio for composite rubber | | | Physical properties of composite rubber | | Amount used (wt.%) | Amount used (wt.%) |
| | Polyorganosiloxane latex-1 [Polyorganosiloxane rubber contained therein] (part) | Butyl acrylate (part) | Allyl methacrylate (part) | Swelling degree | Gel content (%) | | |
| Example 18 | 6.9 [2.0] | 96.04 | 1.96 | 9.4 | 91.1 | 20 | 80 |
| Example 19 | 27.6 [8.0] | 90.16 | 1.84 | 8.9 | 92.4 | 20 | 80 |
| Example 20 | " | " | " | " | " | 30 | 70 |
| Example 21 | " | " | " | " | " | 10 | 90 |
| Comparative Example 11 | " | " | " | " | " | 3 | 97 |
| Comparative Example 12 | 51.7 [15.0] | 83.3 | 1.7 | 7.9 | 92.2 | 20 | 80 |
| Comparative Example 13 | 0 | 98.5 | 1.5 | 8.5 | 91.6 | 20 | 80 |

- to be cont'd -

| Physical properties of resin composition | |
|---|---|
| Izod impact strength with 0.635 cm (1/4") notch [(kg·cm/cm)] (J/cm) | Rockwell hardness (R scale) |
| (62.3) 610.54 | 113 |
| (69.9) 685.02 | 115 |
| (71.6) 701.68 | 107 |
| (48.3) 473.34 | 118 |
| (4.5) 44.1 | 119 |
| (53.7) 526.26 | 82 |
| (5.6) 54.88 | 116 |

Examples 22 to 25 and Comparative Examples 14 to 16

Using the aforementioned polyorganosiloxane latex-1, the graft copolymer was produced in the same manner as in Examples 5 and 6 and Comparative Examples 3 and 4 except that a mixed solution of 0.2 part of cumene hydroperoxide and 50 parts of methyl methacrylate was used as the mixed solution containing monomers to be graft-polymerized onto the composite rubber.

The swelling degree and gel content of the resulting composite rubbers are as shown in Table 7. The graft copolymers obtained were each mixed with a PBT resin (Tufpet-N-1000; produced by Mitsubishi Rayon Co., Ltd.) and a polycarbonate resin (7022 PJ; produced by Mitsubishi Kasei Corp.) in proportions shown in Table 7. Izod impact strength was measured, and the results are shown in Table 7. From these results, it can be seen that the impact resistance and Rockwell hardness are high only when the polyorganosiloxane content is 1 to 10 wt.% of the composite rubber.

Table 7

| | Resin composition | | | | | |
|---|---|---|---|---|---|---|
| | Graft copolymer | | | | | |
| | Feed ratio for composite rubber | | | Physical properties of composite rubber | | Amount used (wt.%) |
| | Polyorganosiloxane latex-1 [Polyorganosiloxane rubber contained therein] (part) | Butyl acrylate (part) | Allyl meth-acrylate (part) | Swelling degree | Gel content (%) | |
| Example 22 | 6.9 [2.0] | 96.04 | 1.96 | 9.4 | 91.1 | 15 |
| Example 23 | 27.6 [8.0] | 90.16 | 1.84 | 8.9 | 92.4 | 15 |
| Example 24 | " | " | " | " | " | 25 |
| Example 25 | " | " | " | " | " | 10 |
| Comparative Example 14 | " | " | " | " | " | 3 |
| Comparative Example 15 | 51.7 [15.0] | 83.3 | 1.7 | 7.9 | 92.2 | 15 |
| Comparative Example 16 | 0 | 98.5 | 1.5 | 8.5 | 91.6 | 50 |

- to be cont'd -

- cont'd -

| Resin composition: Polycarbonate resin, Amount used (wt.%) | Resin composition: PBT resin, Amount used (wt.%) | Physical properties of resin composition: Izod impact strength with 0.635 cm (1/4") notch (-30°C) [(kg·cm/cm)] (J/cm) | Physical properties of resin composition: Rockwell hardness (R scale) |
|---|---|---|---|
| 50 | 35 | (38.6) 378.28 | 106 |
| 50 | 35 | (42.5) 416.5 | 105 |
| 40 | 35 | (44.8) 439.04 | 103 |
| 55 | 35 | (35.6) 348.88 | 110 |
| 62 | 35 | (3.6) 35.28 | 104 |
| 50 | 35 | (39.2) 384.16 | 85 |
| 50 | 35 | (2.8) 27.44 | 108 |

## Claims

1. A high impact resin composition comprising 5 wt.% or more of a polyorganosiloxane graft copolymer in which one or more vinyl monomers have been graft-polymerized onto a composite rubber, wherein the weight ratio of composite rubber to vinyl monomer being 30-95:5-70, the composite rubber having such a structure that 1 to 10 wt.% of a polyorganosiloxane rubber component and 99 to 90 wt.% of a polyalkyl (meth)acrylate rubber component are tangled with each other so as not to separate, as well as having a gel content of 85% or more and a swelling degree of 3 to 15, both measured with a toluene solvent, and an average particle size of 0.08 to 0.6 μm, said composite rubber being obtainable by first preparing a latex of the polyorganosiloxane rubber, then impregnating the particles of the polyorganosiloxane rubber with an alkyl (meth)acrylate, a crosslinking agent for polyalkyl (meth) acrylate rubbers and a graft-linking agent for polyalkyl (meth)acrylate rubbers and then carrying out a polymerization, and at least one member selected from the group consisting of a polycarbonate resin, a polyester resin, and a homopolymer and copolymer obtained by polymerizing 70 to 100 wt.% of at least one vinyl monomer selected

from the group consisting of aromatic alkenyl compounds, vinyl cyanide compounds and (meth)acrylates with 0 to 30 wt.% of other vinyl monomer copolymerizable with those vinyl monomers.

2. The resin composition according to claim 1, wherein the gel content of said composite rubber is 90% or more, and the swelling degree is 4 to 14.

3. The resin composition according to claim 1, wherein the polyorganosiloxane component has the repeating unit of dimethylsiloxane, and the polyalkyl (meth)acrylate component has the repeating unit of n-butyl acrylate.

4. The resin composition according to claim 1, wherein said polycarbonate resin is a resin produced from 4,4'-dihydroxy-2,2-diphenylpropane (bisphenol A) and phosgene.

5. The resin composition according to claim 1, wherein said polyester resin is a polybutylene terephthalate resin.

**Patentansprüche**

1. Hochschlagfeste Harzzusammensetzung, umfassend 5 Gew.-% oder mehr eines Polyorganosiloxan-Pfropfcopolymeren, bei dem ein oder mehrere Vinylmonomere auf einen Verbundkautschuk pfropfcopolymerisiert worden sind, wobei das Gewichtsverhältnis von Verbundkautschuk zu Vinylmonomer 30-95:5-70 beträgt, der Verbundkautschuk eine solche Struktur aufweist, daß 1 bis 10 Gew. -% einer Polyorganosiloxan-Kautschukkomponente und 99 bis 90 Gew.-% einer Polyalkyl(meth)acrylat-Kautschukkomponente in untrennbarer Weise verknäuelt sind, und einen Gelgehalt von 85 % oder mehr und einen Quellgrad von 3 bis 15, beide gemessen mit einem Toluol-Lösungsmittel, sowie eine durchschnittliche Teilchengröße von 0,08 bis 0,6 µm aufweist, wobei der Verbundkautschuk dadurch erhältlich ist, daß zuerst ein Latex des Polyorganosiloxankautschuks hergestellt wird, dann die Teilchen des Polyorganosiloxankautschuks mit einem Alkyl(meth) acrylat, einem Vernetzungsmittel für Polyalkyl (meth)acrylat-Kautschuke und einem Pfropfvernetzugnsmittel für Polyalkyl(meth)acrylat-Kautschuke imprägniert werden und danach eine Polymerisation durchgeführt wird, und mindestens einen Vertreter, gewählt aus der ein Polycarbonatharz, ein Polyesterharz und ein Homopolymer und Copolymer, erhalten durch Polymerisieren von 70 bis 100 Gew. -% mindestens eines Vinylmonomeren, gewählt aus der aromatische Alkenylverbindungen, Vinylcyanidverbindungen und (Meth)Acrylate umfassenden Gruppe mit 0 bis 30 Gew.-% eines anderen, mit diesen Vinylmonomeren copolymerisierbaren Monomeren, umfassenden Gruppe.

2. Harzzusammensetzung nach Anspruch 1, wobei der Gelgehalt des Verbundkautschuks 90 % oder mehr beträgt und der Quellgrad 4 bis 14 ist.

3. Harzzusammensetzung nach Anspruch 1, wobei die Polyorganosiloxan-Komponente die wiederkehrende Einheit von Dimethylsiloxan, und die Polyalkyl(meth)acrylat-Komponente die wiederkehrende Einheit von n-Butylacrylat aufweist.

4. Harzzusammensetzung nach Anspruch 1, wobei das Polycarbonatharz ein aus 4,4'-Dihydroxy-2,2-diphenylpropan (Bisphenol A) und Phosgen hergestelltes Harz ist.

5. Harzzusammensetzung nach Anspruch 1, wobei das Polyesterharz ein Polybutylenterephthalatharz ist.

**Revendications**

1. Une composition de résine à grande résistance au choc, comprenant 5 % en poids ou plus d'un copolymère greffé de polyorganosiloxane dans lequel un ou plusieurs monomères vinyliques ont été polymérisés par greffage sur un caoutchouc composite, le rapport en poids du caoutchouc composite au monomère vinylique étant de 30-95: 5-70, le caoutchouc composite ayant une structure telle que 1 à 10 % en poids d'un composant caoutchouc de polyorganosiloxane et 99 à 90 % en poids d'un composant caoutchouc de poly(méth)acrylate d'alkyle sont entremêlés de manière à ne pas se séparer, et ayant également une teneur en gel de 85 % ou plus et un degré de gonflement de 3 à 15, tous deux mesurés avec du toluène comme solvant, et une taille moyenne de particules de 0,08 à 0,6 µm, ledit caoutchouc composite pouvant être obtenu en préparant d'abord un latex du caoutchouc de polyorganosiloxane, puis en imprégnant les particules du caoutchouc de polyorganosiloxane avec un (méth)acrylate d'alkyle, un agent de réticulation pour caoutchoucs de poly(méth)acrylate d'alkyle et un agent de greffage pour

caoutchoucs de poly(méth)acrylate d'alkyle, puis en effectuant une polymérisation, et au moins un membre du groupe formé par une résine polycarbonate, une résine polyester et un homopolymère et un copolymère obtenus en polymérisant 70 à 100 % en poids d'au moins un monomère vinylique choisi dans le groupe formé par les composés alcényliques aromatiques, les cyanures de vinyle et les (méth)acrylates avec 0 à 30 % en poids d'un autre monomère vinylique copolymérisable avec ces monomères vinyliques.

**2.** La composition de résine selon la revendication 1, dans laquelle la teneur en gel dudit caoutchouc composite est de 90 % ou plus, et le degré de gonflement est de 4 à 14.

**3.** La composition de résine selon la revendication 1, dans laquelle le composant polyorganosiloxane possède le motif récurrent de diméthylsiloxane, et le composant poly(méth)acrylate d'alkyle possède le motif récurrent d'acrylate de n-butyle.

**4.** La composition de résine selon la revendication 1, dans laquelle ladite résine polycarbonate est une résine produite à partir de 4,4'-dihydroxy-2,2-diphénylpropane (bisphénol A) et de phosgène.

**5.** La composition de résine selon la revendication 1, dans laquelle ladite résine polyester est une résine de polytéréphtalate de butylène.